(19) **Europäisches Patentamt / European Patent Office / Office européen des brevets**

(11) **EP 1 921 843 A2**

(12) # EUROPEAN PATENT APPLICATION

(43) Date of publication:
**14.05.2008 Bulletin 2008/20**

(51) Int Cl.:
*H04N 5/225* (2006.01)   *H04N 5/232* (2006.01)

(21) Application number: **07022012.4**

(22) Date of filing: **13.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **13.11.2006 JP 2006306778**

(71) Applicant: **Fujinon Corporation**
**Saitama-shi,**
**Saitama (JP)**

(72) Inventors:
• **Kurita, Kazuyuki**
 **Saitama (JP)**
• **Okita, Nobuaki**
 **Osaka (JP)**

(74) Representative: **Klunker . Schmitt-Nilson . Hirsch**
**Winzererstrasse 106**
**80797 München (DE)**

(54) **Remote-controlled platform system**

(57)   When a shot reproduction command of a preset function is given from a platform controller 12 and a zoom position of a shot to be reproduced is closer to the wide side than a current position, CPU 42 of a platform main body 16 performs driving of the zoom prior to driving of the pan/tilt. On the contrary, when the zoom position of the shot to be reproduced is closer to the telephoto side than the current position, CPU 42 performs the driving of the pan/tilt prior to the driving of the zoom.

*FIG. 3*

PLATFORM CONTROLLER 12

PLATFORM 16

EP 1 921 843 A2

**Description**

BACKGROUND OF THE INVENTION

1. Technical Field

The invention relates to a remote-controlled platform system, and more particularly, to a remote-controlled platform system having a preset function of registering, in advance as shots, desired shooting positions that are changed according to setting positions of the pan/tilt, the zoom, and the focus of a television camera mounted on a platform and then automatically setting the camera to the shooting position of any of the shots when a shot reproduction command is given by a predetermined shot reproduction operation.

2. Description of the Related Art

A remote-controlled platform system is known, which includes a platform on which mounted is a camera such as a television camera and which controls panning and tilting (pan/tilt) , zoom, and focus of the mounted camera and a platform controller which is connected to the platform via a cable or a communication line and which has an operation member for instructing the control details of the platform (see Japanese Patent Nos.2535567, 2868087 and 3283615). According to these remote-controlled platform systems, a shooting composition, such as a shooting direction and a shooting angle of view, of the television camera can be operated remotely by operating the platform controller.

In addition, a function called as "a preset function" is also known in these remote-controlled platform systems. The preset function is a function that can store desired shooting positions, which are changed according to setting positions of the pan/tilt, the zoom, and the focus of the television camera, in advance as shots and then can automatically reproduce the registered shots by performing a predetermined shot reproduction operation (for example, see Japanese Patent No.2535567).

By the way, in the above preset function, when a shot reproduction is instructed by performing the shot reproduction operation, respective drivings of the pan/tilt, the zoom, and the focus of the television camera from a shooting position set at that time to the shooting position of the shot are started simultaneously and finished simultaneously.

However, when an operator is to set the television camera to a predetermined shooting position by a manual operation without using the preset function, it is less likely to perform the pan/tilt operation and the zoom-and-focus operation simultaneously. Therefore, a camera operation during the manual operation is different from that during the shot reproduction provided by the preset function.

For example, with regard to a relation between the pan/tilt operation (shooting direction) and the zoom operation (shooting angle of view), when the pan/tilt of a television camera is manually operated, the operation is often performed in a state where the zoom is set to the wide side. In other words, when a target setting position of the zoom is closer to the wide side than the current position, the zoom operation (zoom-out operation) is performed initially and then the pan/tilt operation is performed. On the contrary, when the target setting position of the zoom is closer to the telephoto side than the current position, the pan/tilt operation is first performed and then the zoom operation is performed.

Also, regardless of the target setting position of the zoom, when a subject as a shooting target does not appear in the shooting angle of view, the zoom operation toward the wide side may be performed before the pan/tilt operation is performed.

In the preset functions disclosed in the above publications, the shot images may cause an uncomfortable feeling, since a shot is reproduced by a camera operation different from the manual operation. Also, there is a disadvantage that use of the preset function is limited to particular situations.

SUMMARY OF THE INVENTION

The invention has been made in view of the above circumstances and provides a remote-controlled platform system that can shoot images that cause no uncomfortable feeling even if a shot is reproduced using a preset function and that improves practicality of the preset function.

[1] According to an aspect of the invention, a remote-controlled platform system for controlling pan, tilt and zoom of a camera mounted on a platform in accordance with an operation through a controller, includes a shot storage and a first shot reproduction unit. The shot storage that stores, as a shot, a desired shooting position that is changed according to setting positions of the pan, the tilt and the zoom of the camera. The first shot reproduction unit controls shot reproduction to set the camera to the shooting position stored as the shot in the shot storage when a shot reproduction command is given by a predetermined shot reproduction operation. The first shot reproduction unit includes a determination unit. When the shot reproduction command is given, the determination unit determines which a predetermined position is closer to either a wide side or a telephoto side than a current position of the zoom at a time when the shot reproduction command is given. When the determination unit determines that the predetermined positions is closer to the wide side than the current position of the zoom, the first shot reproduction unit starts driving of the zoom toward the wide side prior to driving of the pan/tilt to drive the zoom for a predetermined position and then starts the driving of the pan/tilt for a position of the shot after the driving of the zoom is stopped or a predetermined time before the driving of the zoom is stopped.

With this configuration, the driving of the zoom toward the wide side is performed prior to the driving of the pan/tilt at the time of the shot reproduction by the preset function. Therefore, it is possible to control the camera by an operation similar to the case where the camera is set to a predetermined shooting position by a manual operation. Thus, images that cause no uncomfortable feeling can be shot during the shot reproduction, and the practicality of the preset function is improved.

[2] In the remote-controlled platform system of [1], the predetermined position used by the determination unit may be a position of the zoom of the shot.

With this configuration, when the zoom is driven toward the wide side in order to reproduce the shot, the zoom is driven prior to the driving of the pan/tilt. Thus, the camera is controlled by the operation similar to the case where the shooting position is manually operated together with zooming-out. As a result, images that cause no uncomfortable feeling can be shot during the shot reproduction.

[3] In the remote-controlled platform system according of [2], the first shot reproduction unit finishes the driving of the pan/tilt and the driving of the zoom simultaneously.

This configuration shows one mode in which the driving of the pan/tilt and the driving of the zoom are finished simultaneously even if the driving of the zoom is started prior to the driving of the pan/tilt.

[4] In the remote-controlled platform system of any one of [1] to [3], when the determination unit determines that the predetermined position is closer to the telephoto side than the current position, the first shot reproduction unit starts the driving of the pan/tilt prior to the driving of the zoom, to drive the pan/tilt for the position of the shot and then starts the driving of the zoom for the position of the shot after the driving of the pan/tilt are stopped or the predetermined time before the driving of the pan/tilt are stopped.

This configuration shows another mode in which when the zoom is driven to the telephoto side in order to reproduce the shot, the pan/tilt is driven prior to the driving of the zoom.

[5] In the remote-controlled platform system of any one of [1] to [3], when the determination unit determines that the predetermined position is closer to the telephoto side than the current position, the first shot reproduction unit starts the driving of the pan/tilt and the driving of the zoom simultaneously to drive the pan/tilt and the zoom for the position of the shot.

This configuration shows still another mode different from the configuration of [4], in which when the zoom is driven toward the telephoto side in order to reproduce the shot, the driving of the pan/tilt and the driving of the zoom are started simultaneously.

[6] In the remote-controlled platform system of [1], the predetermined position used by the determination unit is a position that is determined in advance and that is different from the position of the shot.

With this configuration, the driving of the zoom or the driving of the pan/tilt is started irrespective of the position of the zoom of the shot. For example, when the current position of the zoom is closer to the telephoto side than the position determined in advance, the zoom may be driven to the predetermined position toward the wide side prior to the driving of the pan/tilt. Thereby, since the driving of the pan/tilt is performed at a state where the shooting angle of view is changed to the wide side, images that cause no uncomfortable feeling can be shot.

[7] The remote-controlled platform system of any one of [1] to [6] may further include a reproduction-time designating unit. The reproduction-time designating unit designates a shot reproduction time. The first shot reproduction unit finishes the driving of the pan/tilt and the driving of the zoom within the shot reproduction time designated by the reproduction-time designating unit and causes a driving speed of the pan/tilt and a driving speed of the zoom meet a predetermined relation.

This configuration shows a condition that determines the driving speed of the pan/tilt and the driving speed of the zoom so as to finish the shot reproduction within the designated shot reproduction time in the case where the shot reproduction time is designated.

[8] The reproduction-time designating unit system of any one of [1] to [7] may further include an overlap time designating unit. The overlap time designating unit designates an overlap time during which the driving of the pan/tilt and the driving of the zoom overlap each other.

In this configuration, the overlap time is designated during which the driving of the pan/tilt and the driving of the zoom are overlapped with each other. For example, when the driving of the pan/tilt is started just before the driving of the zoom is finished, it is possible to adjust to what extent of time point before the time at which the driving of the zoom is finished the driving of the pan/tilt should be started.

[9] The an overlap time designating unit system according to any one of [1] to [8] may further include a second shot reproduction unit and a selecting unit. When the shot reproduction command is given, the second shot reproduction unit controls the shot reproduction to start the driving of the zoom and the driving of the pan/tilt simultaneously and to finish the driving of the zoom and the driving of the pan/tilt simultaneously. The selecting unit selects one that controls the shot reproduction from among the first shot reproduction unit and the second shot reproduction unit.

This configuration enables the shot reproduction control to be switched to the conventional shot reproduction control.

According to the remote-controlled platform system of any of the above configurations, even if the preset function is used, images that cause no uncomfortable feeling can be shot, similarly to the case where an operator manually operates the system, thereby improving the practicality of the preset function. It is thus possible to reduce a burden of an operator.

BRIEF DESCRIPTION OF THE DRAWINGS

Fig. 1 is a perspective view illustrating appearance of a platform in a remote-controlled platform system according to an embodiment of the invention.

Fig. 2 is an appearance diagram illustrating the configuration of an operating section of a platform controller.

Fig. 3 is a block diagram illustrating the configuration of a processing section in the remote-controlled platform system.

Fig. 4 is a flowchart illustrating a flow of specific processes performed by a CPU of a platform main body during shot reproduction.

Fig. 5 is a graph illustrating a relation between a driving speed of pan/tilt and a driving speed of zoom suitable for the driving speed of the pan/tilt.

Fig. 6 is a diagram illustrating a process of setting up a total driving time of the pan/tilt and the zoom to a designated shot reproduction time in step S20 of Fig. 4.

DETAILED DESCRIPTION OF EMBODIMENT(S) OF THE INVENTION

A remote-controlled platform system according to exemplary embodiments of the invention will be described in detail hereinafter with reference to the accompanying drawings.

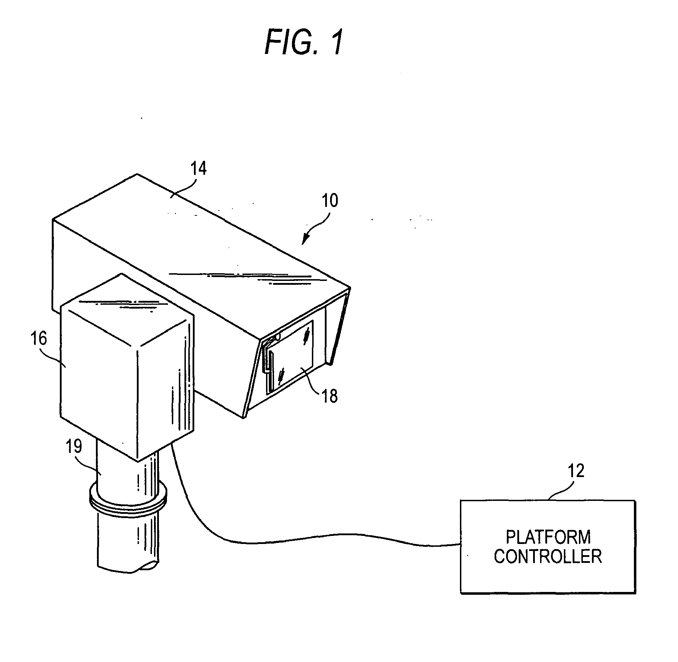

Fig. 1 is a perspective view illustrating appearance of a platform in a remote-controlled platform system according to an embodiment of the invention. The platform 10 shown in Fig. 1 includes a housing 14 that houses a television camera not shown (hereafter, simply referred to as "camera") and a platform main body 16 that rotates the camera in horizontal and vertical directions together with the housing 14 (the pan/tilt operation). The front side of the housing 14 is provided with a transparent front glass 18. The camera housed in the housing 14 shoots images outside the housing 14 through the front glass 18.

The housing 14 is supported in a cantilever manner by a tilting shaft (not shown) extending from the platform main body 16. A tilting motor for rotationally driving the tilting shaft is built in the platform main body 16. By the driving force of the tilting motor, the camera in the housing 14 is tilted together with the housing 14.

The platform main body 16 is rotationally supported by a panning shaft 19 fixed to a mounting base not shown. A panning motor connected to a gear (not shown) of the panning shaft 19 is built in the platform main body 16. By the driving force of the panning motor, the platform main body 16 rotates about the panning shaft 19 and the camera in the housing 14 is panned together with the housing 14 in conjunction with such rotation.

A platform controller 12 is connected to the platform main body 16 of the platform 10 so as to be able to communicate therebetween. The platform main body 16 and the platform controller 12 may be connected to each other, for example, directly in a wired or wireless manner or through another device such as a power supply or through a communication line such as a dedicated line or a public line. Any connection technique may be used.

Various operation members for giving commands regarding control of the platform 10 are disposed in the platform controller 12. Command signals for instructing respective operations of the pan/tilt, zoom, and focus of the camera are sent to the platform 10 from the platform controller 12 in accordance with operations of the operation members.

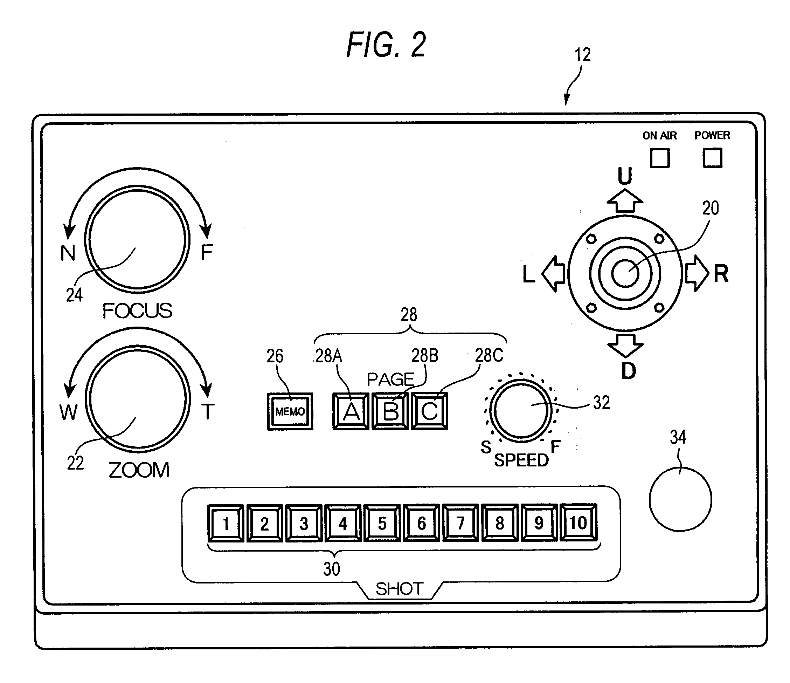

Fig. 2 is an appearance diagram illustrating the configuration of an operating section of the platform controller 12. In Fig. 2, a joystick 20, a zoom knob 22, and a focus knob 24 are disposed in the operating section of the platform controller 12. The joystick 20 is an operation member for manually performing the pan/tilt operation of the camera. By tilting the joystick 20 in the back and forth direction and in the left and right direction, the camera can be panned/tilted in a direction corresponding to the tilted direction and at a speed corresponding to the tilted angle.

The zoom knob 22 and the focus knob 24 are operation members for manually performing the zoom operation and the focus operation of the camera (a shooting optical system of the camera), respectively. By rotating the zoom knob 22, the zoom of the camera can be set at a position corresponding to the rotated position thereof. Also, by rotating the focus knob 24, the focus of the camera can be set at a position corresponding to the rotated position thereof.

The remote-controlled platform system is also has a preset function. A memo switch 26, page switches 28, and shot switches 30 associated with the preset function are disposed in the platform controller 12.

The preset function is a function of registering, in advance as a shot, a desired shooting position which is determined according to respective setting positions of the pan/tilt, the zoom, and the focus of the camera and automatically reproducing the registered shooting position by performing a predetermined shot reproduction operation (by operating the shot switch 30).

In the figure, the platform controller 12 can be switched between a reproduction mode and a registration mode by the memo switch 26. When a shot is to be registered, the platform controller 12 is set to the registration mode. Subsequently, the joystick 20, the zoom knob 22, and the focus knob 24 are operated so that the camera is set up at a desired shooting position to be registered as a shot. Thereafter, one of the shot switches 30, which are disposed correspondingly to shot numbers 1 to 10, is pressed. As a result, the shooting position of the camera at that time is registered as a shot having the one of the shot numbers.

On the other hand, when a registered shot is to be reproduced, the platform controller 12 is operated in the reproduction mode. When the platform controller 12 is switched to the registration mode, the memo switch 26 is pressed to switch the mode to the reproduction mode. Then, of the plural shot switches 30, a shot switch having a shot number in which the shot to be reproduced is registered is pressed. As a result, the respective positions of the pan/tilt, zoom, and focus of the camera are controlled automatically and the shooting position, which is registered as the shot having the shot number, is reproduced.

Also, a speed adjustment knob 32 for adjusting time from start of the shot reproduction until finish of the shot reproduction during the shot reproduction and an overlap time adjustment knob 34 (which will be described in detail later) are disposed in the operating section of the platform controller 12.

Three switches 26A, 26B, and 26C are disposed in the operating section of the platform controller 12. A desired page can be selected among three pages A, B, and C by selecting one of the page switches 26A, 26B, and 26C. Since the same shot switch in the respective pages is treated as shot switches having different shot numbers, 30 (= 10 x 3) shots in total can be registered and then reproduced by changing the page. However, in the following description, it is assumed that the page switches 26A, 26B, and 26C are not provided.

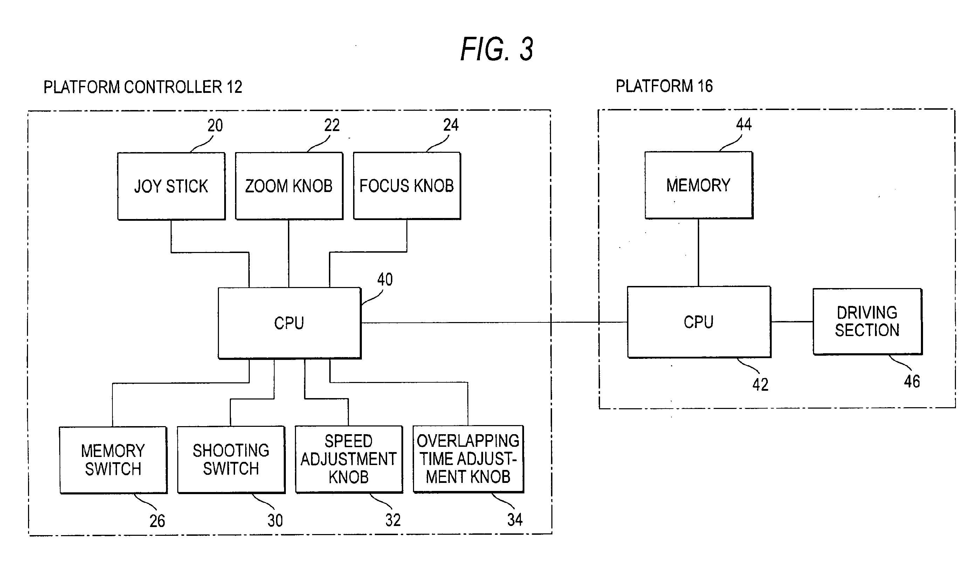

Processes regarding the shot reproduction in the preset function will be described in detail hereinafter. Fig. 3 is a block diagram illustrating the configuration of a processing section of the remote-controlled platform system. As shown in Fig. 3, CPUs 40 and 42 are mounted on the platform 10 (platform main body 16) and the platform controller 12, respectively, and CPUs 40 and 42 are connected to each other so as to be able to communicate with each other via a communication circuit (not shown). CPU 40 detects the operation of the joystick 20, the zoom knob 22, the focus knob 24, the memo switch 26, the shot switch 30, the speed adjustment knob 32, and the overlap time adjustment knob 34, which are all disposed in the operating section of the platform controller 12. The CPU 40 transmits command signals for individual control of the pan/tilt, the zoom, and the focus and command signals for the shot reproduction or shot registration to CPU 42 of the platform main body 16 in accordance with the detected operations.

For example, when the joystick 20, the zoom knob 22, or the focus knob 24 is operated, CPU 40 transmits a command signal for instructing the operation speeds or the setting positions of the pan/tilt, the zoom, and the focus to CPU 42 of the platform main body 16 in accordance with the operations. On the other hand, in the platform main body 16, the driving section 46 (not described in detail) drives the pan/tilt, the zoom, and the focus of the camera. Upon receipt of the command signal, CPU 42 of the platform main body 16 causes the driving section 46 to individually drive the pan/tilt, the zoom, and the focus in accordance with contents of the received command signal.

When CPU 40 of the platform controller 12 detects that the memo switch 26 is pressed in the reproduction mode, the platform controller 12 is changed to the registration mode in which a shot can be registered. When the joystick 20, the zoom knob 22, and the focus knob 24 are operated in the registration mode, a command signal regarding individual control of the pan/tilt, the zoom, and the focus is transmitted to CPU 42 of the platform main body 16 based on the operations as described above to execute the pan/tilt, the zoom, and the focus in accordance with the operations. On the other hand, when CPU 40 detects that a shot switch having a certain shot number among the plural shot switches 30 is pressed in the registration mode, a command signal which indicates the shot number corresponding to the pressed shot switch and which instructs registering the shot in the shot number is transmitted to CPU 42 of the platform main body 16.

Upon reception of the command signal, CPU 42 of the platform main body 16 stores the respective positions of the pan/tilt, the zoom, and the focus at that time in a built-in memory 44 as shot data corresponding to the shot number designated by the command signal received from the platform controller 12. The positions of the panning/tilting can be read out from a position sensor which has a detecting shaft connected to the panning shaft and the tilting shaft in the platform main body 16. Also, the position of the zoom and the position of the focus can be acquired from a position sensor that the camera (lens device) has.

In a normal state, CPU 40 of the platform controller 12 is in the reproduction mode. When the memo switch 26 is pressed in the registration mode, CPU 40 returns to the reproduction mode. In the reproduction mode, when detecting that a certain shot switch among the plural shot switches 30 is pressed, CPU 40 transmits a shot number corresponding to the pressed shot switch and a command signal for instructing reproduction of a shot corresponding to the shot number to CPU 42 of the platform main body 16.

At this time, a speed command value representing a reproduction speed of the shot (shot reproduction time) is also transmitted to CPU 42 of the platform main body 16. When detecting that the shot switch is pressed, CPU 40 of the platform controller 12 reads out a setting position of the speed adjustment knob 32 and then transmits a value corresponding to the setting position as the speed command value to CPU 42 of the platform main body 16.

Furthermore, an overlap-time command value representing an overlap time is transmitted to CPU 42 of the platform main body 16 together with the above command signal. When detecting that the shot switch is pressed, CPU 40 of the platform controller 12 reads out a setting position of the overlap time adjustment knob 34 and then transmits a value corresponding to the setting position as the overlap-time command value to CPU 42 of the platform main body 16.

When receiving the command signal of the shot reproduction, CPU 42 of the platform main body 16 reads out shot data of the shot number designated by the command signal from the memory 44 and controls the pan/tilt, the zoom, and the focus of the camera such that the shooting position of the camera, that is, the respective positions of the pan/tilt, the zoom, and the focus of the camera coincide with the respective positions of the shootings registered as the shot data. The driving of the pan/tilt, the driving of the zoom, and the driving of the focus at this time are performed at driving speeds that are determined based on the speed command value.

The speed command value and the overlap-time command value may be transmitted to CPU 42 of the platform main body 16 and registered as the shot data when a shot is registered, but not when the shot is reproduced. Those values may be referenced to when the shot is reproduced.

By the way, in the shot reproduction, CPU 42 of the platform main body 16 performs the driving of the pan/tilt, and the driving of the zoom and focus with the driving of the pan/tilt, and the driving of the zoom and focus being staggered from each other. For example, in the case where an operator manually sets up the camera at a desired shooting position by using the joystick 20, the zoom knob 22, and focus knob 24, if it is necessary to perform a zoom-in operation for setting the shooting angle of view to be closer to the telephoto side, the pan/tilt operation is often first performed and then the zoom operation is performed. On the contrary, if it is necessary to perform a zoom-out operation for setting the shooting angle of view to be closer to the wide side is necessary, the zoom operation is often first performed and then the pan/tilt operation is performed. CPU 42 of the platform main body 16 prevents any uncomfortable feeling from being generated in images shot during the shot reproduction, by executing similar control in the shot reproduction to the operator's manual operation.

In other words, when the zoom position of the shot to be reproduced is closer to the telephoto side than a position at a time when a shot reproduction command is given (hereafter, referred to as a "current position"), the driving of the pan/tilt is first started and then the driving of the zoom is started after (after the pan/tilt is driven to a shooting position) or just (a predetermined time) before the driving of the pan/tilt is stopped, thereby setting up the zoom at the shooting position.

On the other hand, when the zoom position of the shot to be reproduced is closer to the wide side than the current position, the driving of the zoom is first started, and then the driving of the pan/tilt is started after (after the zoom reaches a desired shooting position) or just (the predetermined time) before the driving of the zoom is stopped, thereby setting up the pan/tilt at the shooting position.

In this embodiment, described will be the case where one of (i) the driving of the pan/tilt and (ii) the driving of the zoom is started the predetermined time before the earlier started other is stopped. Also, in this embodiment, it is assumed that the predetermined time during which the earlier driving and the later driving overlap each other is adjusted by the overlap time adjustment knob 34.

The control of the focus is not particularly limited. For example, any case may be adopted among (i) the case where the driving of the focus is started at the same time as the driving of the pan/tilt or the driving of the zoom and is finished at the same time as the driving of the pan/tilt or the driving of the zoom, (ii) the case where the driving of the focus is started at the same time as any of the driving of the pan/tilt and the driving of the zoom is started and the driving of the focus is finished at the same time as all the driving of the pan/tilt and the driving of the zoom are finished, and (iii) the case where the driving of the focus is started before the driving of the pan/tilt and the driving of the zoom are started or after the driving of the pan/tilt and the driving of the zoom are finished. Alternatively, in another embodiment, the focus may be manually or automatically controlled independently even during the shot reproduction. Accordingly, the focus control is not considered hereinafter.

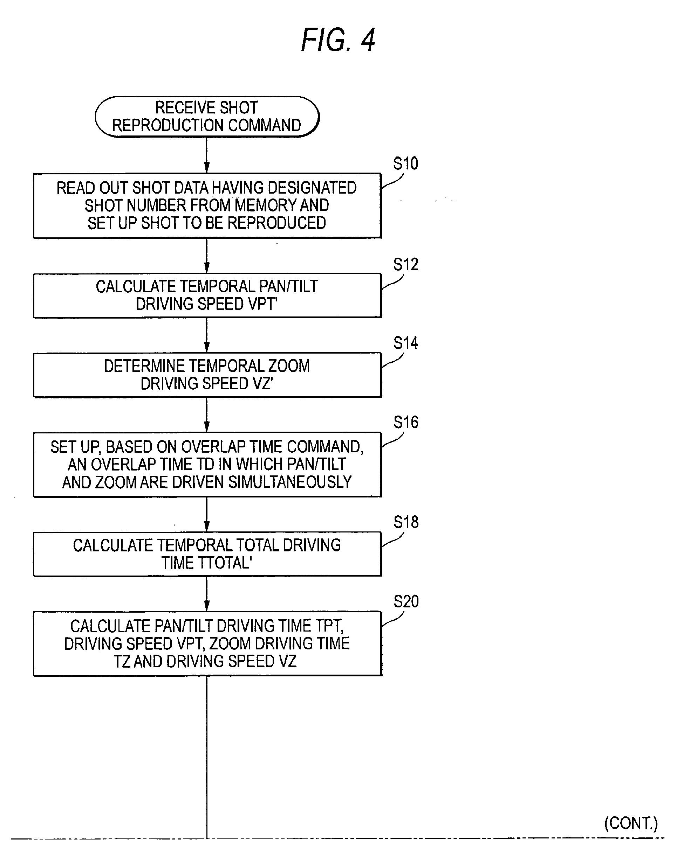

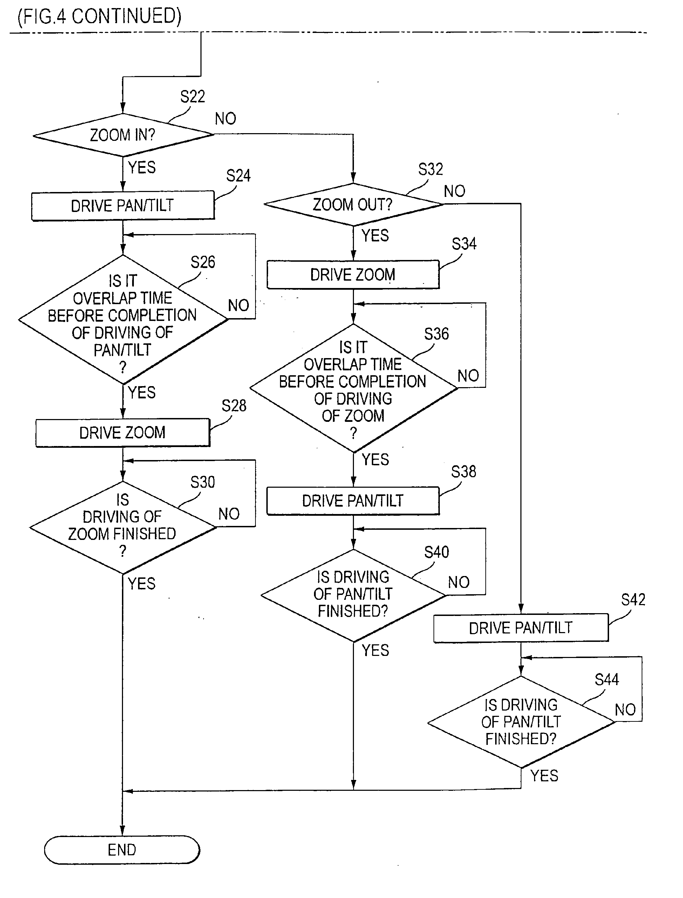

Specific processes of CPU 42 of the platform main body 16 in the shot reproduction will be described with reference to the flowchart of Fig. 4. As mentioned above, when receiving a command signal for reproducing a shot from the platform controller 12, CPU 42 of the platform main body 16 reads out shot data having a shot number designated by the command signal from the memory 44. Subsequently, CPU 42 sets positions of the pan/tilt and a position of the zoom, which are registered as the shot data, as a position of the shot to be reproduced (step S10).

The pan/tilt driving speeds and the zoom driving speed in the shot reproduction and timings for starting the respective drivings are determined by the following processes of steps S12 to S18, on the basis of the speed command value and the overlap-time command value given from the platform controller 12. The speed command value given from the platform controller 12 is a value, which is given from the platform controller 12 based on the setting position of the speed adjustment knob 32 of the operating section of the platform controller 12. For example, the speed command value represents a shot reproduction time from a time point when the driving for reproducing a designated shot is started to a time point when the driving is finished (stopped). The shot reproduction time designated by the speed command value is referred to as "designated shot reproduction time," and the value is denoted by $TS0$.

CPU 42 of the platform main body 16 calculates a changed orientation angle $DPT$ of the pan/tilt in the case where the positions of the pan/tilt of the camera are linearly changed from the current position to the positions of the pan/tilt of the shot. CPU 42 divides the changed orientation angle $DPT$ by the designated shot reproduction time $TS0$, and uses the resultant value as a temporal pan/tilt driving speed $VPT'$ (step S12). That is, $VPT' = DPT/TS0$ is calculated.

The actual driving of the pan/tilt is performed with being separated into direction components of a panning direction (horizontal direction) and a tilting direction (vertical direction). The driving speeds are individually set up such that the drivings in the respective directions are started simultaneously and finished simultaneously. However, in this embodiment, the driving speed $VPT'$ obtained by synthesizing the driving speeds in the both directions is calculated as a driving speed in a movement direction obtained by synthesizing the movements in the both directions of the panning direction and the tilting direction of the camera.

Subsequently, CPU 42 determines a temporal zoom driving speed $VZ'$ so that a changed speed of the shooting angle of view is appropriate relatively to the temporal pan/tilt driving speed $VPT'$ obtained in step S10 (step S14).

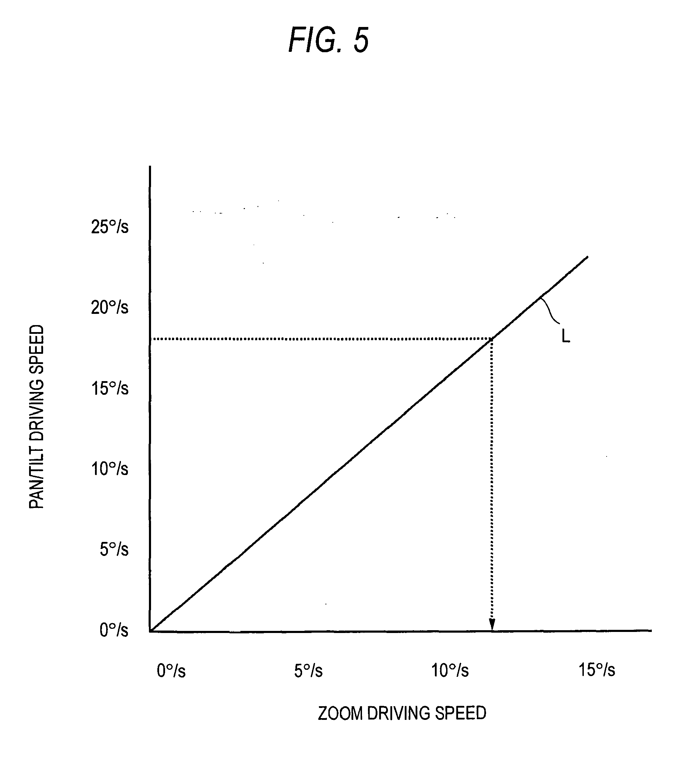

It is assumed that the horizontal axis denotes the zoom driving speed and the vertical axis denotes the pan/tilt driving speed in Fig. 5. The optimum relation between the pan/tilt driving speed and the zoom driving speed is determined in advance as a relation similar to a graph line L. Although the graph line L is shown as a linear line, it may be a non-linear line. CPU 42 calculates the temporal zoom driving speed $VZ'$ corresponding to the temporal pan/tilt driving speed $VPT'$ obtained from the designated shot reproduction time $TS0$ on the basis of relation data representing this relation. For example, in the graph of Fig. 5, when the temporal pan/tilt driving speed $VPT'$ is 17°/second, the temporal zoom driving speed $VZ'$ is 12°/second.

Then, the CPU 42 sets an overlap time $TD$, during which the driving of the pan/tilt and the driving of the zoom overlap each other, on the basis of the overlap-time command value. The overlap-time command value is a value, which is given from the platform controller 12 on the basis of the setting position of the overlap time adjustment knob 34 in the operating section of the platform controller 12. The overlap time designated by the overlap-time command values is referred to as a designated overlap time $TD0$. In this case, the overlap time $TD$ is set as a designated overlap time $TD0$. That is, the result is represented as $TD = TD0$.

Then, a temporal total driving time $TTOTAL'$ from a time point when the shot driving is started to a time point when the shot driving is finished is calculated under the setting of the temporal pan/tilt driving speed $VPT'$ obtained in step S12, the temporal zoom driving speed $VZ'$ obtained in step S14, and the overlap time $TD$ (designated overlap time $TD0$) (step S18).

In this case, the temporal pan/tilt driving time $TPT'$ required for the temporal pan/tilt driving speed $VPT'$ matches the designated shot time $TS0$. That is, $TPT' = TS0$. On the other hand, the temporal zoom driving time $TZ'$ required for the temporal zoom driving speed $VZ'$ is a value obtained by dividing, by $VZ'$, a driving amount $DZ$ when the zoom position is changed from the current position to the zoom position of the shot to be reproduced. That is, $TZ' = DZ/VZ'$. Accordingly, the temporal total driving time $TTOTAL'$ can be obtained by the following expression:

$$TTOTAL' = TPT' + TZ' - TD0 = TS0 + (DZ/VZ') - TD0$$

Next, CPU 42 adjusts the temporal total driving time $TTOTAL'$ obtained in step S18 such that a final total driving time $TTOTAL$ becomes the designated shot reproduction time $TS0$ designated by the speed command value. Specifically, CPU 42 equally adjusts the temporal pan/tilt driving time $TPT'$ and the temporal zoom driving time $TZ'$ such that the final total driving time $TTOTAL$ becomes the designated shot reproduction time $TS0$. CPU 42 also calculates a final pan/tilt driving time $TPT$ and a final zoom driving time $TZ$ and calculates a final pan/tilt driving speed $VPT$ and a final zoom driving speed $VZ$ (step S20). The overlap time $TD$ is fixed to the designated overlap time $TD0$.

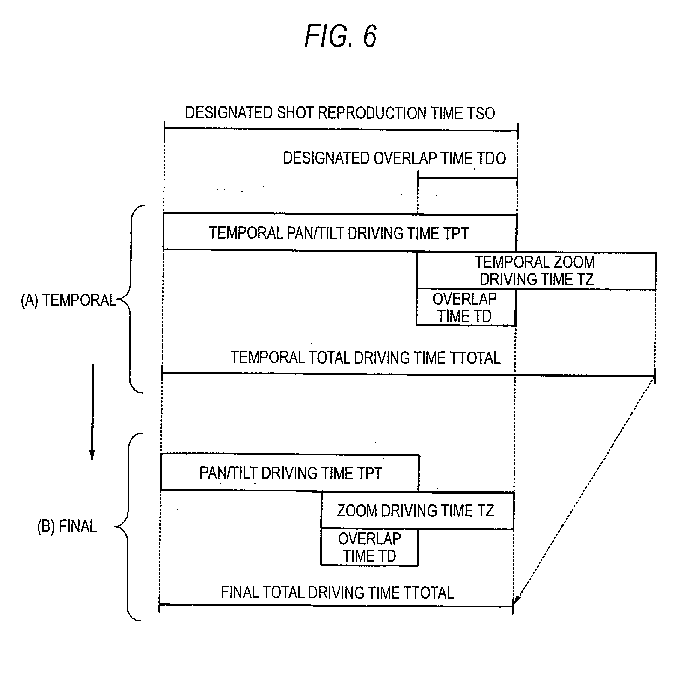

For example, if the case where the driving of the pan/tilt is started first and then the driving of the zoom is started is taken as an example and if the respective driving times $TPT'$ and $TZ'$ and the overlap time $TD$ (designated overlap time $TD0$) in the temporal total time $TTOTAL'$ are shown in Fig. 6(A), a ratio of the temporal pan/tilt driving time $TPT'$ to the temporal zoom driving time $TZ'$ in the temporal total driving time $TTOTAL'$ ($TPT'/TZ'$) can be determined. As shown in Fig. 6 (B), when the final total driving time $TTOTAL$ is set to the designated shot reproduction time $TS0$, the final pan/tilt driving time $TPT$ and the final zoom driving time $TZ$ are obtained such that a ratio ($TPT/TZ$) of the final pan/tilt driving time $TPT$ to the final zoom driving time $TZ$ matches the ratio $TPT'/TZ'$ in the temporal total driving time TTOTAL' and the overlap time TD becomes the designated overlap time TD0. In other words, a ratio of a value obtained by adding the overlap time TD (designated overlap time TD0) to the final total driving time TTOTAL (designated shot reproduction time TS0) to a value obtained by adding the overlap time TD (designated overlap time TD0) to the temporary total driving time TTOTAL' is expressed as in the following expression:

$$K = (TTOTAL + TD)/(TTOTAL' + TD)$$

$$= (TS0 + TD0)/(TTOTAL' + TD0).$$

In this case, the final pan/tilt driving time TPT and the final zoom driving time TZ are obtained by the following expressions:

$$TPT = K \cdot TPT'$$

$$TZ = K \cdot TZ'$$

Considering that the temporal pan/tilt driving time TPT' matches the designated shot time TS0 and the temporal zoom driving time TZ is a value obtained by dividing the zoom driving amount DZ by the temporal zoom driving speed VZ', the final pan/tilt driving times TPT and the final zoom driving time TZ can be obtained by the following expression:

$$TPT = K \cdot TPT' = K \cdot TS0$$

$$TZ = K \cdot TZ' = K \cdot (DZ/VZ').$$

Also, from the final pan/tilt driving time TPT and the final zoom driving time TZ, the final pan/tilt driving speed VPT and the final zoom driving speed VZ can be obtained by the following expressions:

$$VPT = DPT/TPT$$

$$= (1/K) \cdot (DPT/TPT')$$

$$= (1/K) \cdot (DPT/TS0)$$

$$= (1/K) \cdot VPT'$$

$$VZ = DZ/TZ$$

$$= (1/K) \cdot (DZ/TZ')$$

$$= (1/K) \cdot VZ'.$$

In this case, DPT denotes the changed orientation angle of the pan/tilt.

In the above description, shown is that case where the driving of the pan/tilt is started prior to the driving of the zoom. However, the same value can be obtained as the final pan/tilt driving time TPT, the final pan/tilt driving speed VPT, the final zoom driving time TZ, and the final zoom driving speed VZ, even if the driving of the zoom is started prior to the driving of the pan/tilt.

In the case where the focus can be registered as a shot and then reproduced, it is preferable that the driving of the focus is started and finished at the same time as the driving of the zoom. In this case, assuming that the focus driving time matches the zoom driving time TZ and that a driving amount from the current position to the focus position of the shot is DF, the focus driving speed VF is set to DF/TZ.

In this way, when the pan/tilt driving time TPT, the pan/tilt driving speed VPT, the zoom driving time TZ, the zoom driving speed VZ, and a focus driving speed VF are calculated, CPU 42 starts the shot driving. First of all, it is determined as to whether or not the zoom position of the shot to be reproduced is closer to the telephoto side than the current zoom position. That is, it is determined whether or not a zoom-in driving is required (step S22). When it is determined YES, CPU 42 starts the driving of the pan/tilt such that the pan/tilt positions become the pan/tilt positions of the shot. In addition, the driving of the pan/tilt at that time is performed at the driving speed VPT (step S24).

Next, it is determined as to whether or not the time (TPT - TD) obtained by subtracting the overlap time TD (designated overlap time TD0) from the pan/tilt driving time TPT has passed since the driving of the pan/tilt is started (step S26). When it is determined NO, the process of step S26 is repeated. On the other hand, when it is determined YES, the driving of the zoom is started (step S28). At this time, the driving of the zoom is performed at the driving speed VZ. Subsequently, it is determined as to whether or not the driving of the zoom is finished (stopped) (step S30). If it is determined YES, the shot reproduction process is ended.

On the other hand, when it is determined No in step S22, it is further determined as to whether or not the zoom position of the shot is closer to the wide side than the current zoom position. That is, it is determined whether or not a zoom-out driving is required (step S32). When it is determined YES, the driving of the zoom is started such that the zoom position becomes the zoom position of the shot. In addition, the driving of the zoom at that time is performed at the driving speed VZ (step S34).

Then, it is determined as to whether or not the time (TZ - TD) obtained by subtracting the overlap time TD (designated overlap time TD0) from the zoom driving time TZ has passed since the driving of the zoom is started (step S36). When it is determined NO, the process of step S36 is repeated. On the other hand, when it is determined YES, the driving of the pan/tilt is started (step S38). In this case, the driving of the pan/tilt is performed at the driving speed VPT. Thereafter, it is determined as to whether or not the driving of the pan/tilt is finished (stopped) (step S40). If it is determined YES, the shot reproduction process is ended.

If it is determined NO in step S32, the driving of the zoom is not performed. Accordingly, the driving of the pan/tilt is performed at the driving speed VPT (step S42). Subsequently, it is determined as to whether or not the driving of the pan/tilt is finished (stopped) (step S44). If it is determined YES, the shot reproduction process is ended.

In the aforementioned embodiment, the overlap time TD is not changed from the designated overlap time TD0 at the time of calculating the final driving times TPT and TZ by equally adjusting the temporal pan/tilt driving time TPT' and the temporal zoom driving time TZ'. However, the designated time may be equally adjusted. In other words, the final driving times TPT and TZ are obtained using K = TS0/TTOTAL' instead of K = (TS0 + TD0) / (TTOTAL' + TD0) and the final overlap time is obtained as $K_{TD0}$. A user may be able to switch between a mode that the overlap time is equally adjusted and a mode that the overlap time is not equally adjusted.

In the above-mentioned embodiment, the overlap time in which the driving of the pan/tilt and the driving of the zoom overlap each other in the shot reproduction is provided. However, the invention is not limited thereto. Alternatively, after one of the driving of the pan/tilt and the driving of the zoom is ended, the other may be performed. That is, the overlap time may be set to 0.

In the above-mentioned embodiment, when the zoom position of a shot is closer to the wide side than the current position (a position at a time when a command signal of the shot reproduction is received; similar in the following description), the driving of the zoom is started prior to the driving of the pan/tilt and the driving of the pan/tilt is started the overlap time before the zooming driving is finished. However, both the driving may be finished simultaneously.

In the above-mentioned embodiment, when the zoom position of the shot is closer to the telephoto side than the current position, the driving of the pan/tilt is started prior to the driving of the zoom. In this case, the driving of the pan/tilt and the driving of the zoom may be started simultaneously.

In the above-mentioned embodiment, one of the driving of the pan/tilt and the driving of the zoom which is performed earlier than the other is determined on the basis of the fact whether the zoom position of the shot is closer to the wide side or the telephoto side than the current position. However, the driving of the pan/tilt may be performed in the shot reproduction in a state where the zoom is always set to be closer to the wide side than a predetermined position. In this case, the following processes are performed. First of all, when a command signal of the shot reproduction is received, it is determined as to whether or not the current position is closer to the telephoto side than the predetermined position. If it is determined that the current position is closer to the telephoto side than the predetermined position, the zoom is driven toward the wide side to set up the zoom at a position where the shooting angle of views exceed a predetermined shooting angle of views (for example, at a position of the wide end). The driving of the pan/tilt for the position of the shot is started after the driving of the zoom is finished or a predetermined time before the driving of the zoom is finished. The subsequent processes of the shot reproduction are performed as described in the aforementioned embodiment.

In addition, any one of the shot reproduction process according to the above-mentioned embodiment and the shot reproduction process of the related art in which the driving of the pan/tilt and the driving of the zoom (and the focus) are started simultaneously and finished simultaneously may be selected by a predetermined selection switch.

**Claims**

1. A remote-controlled platform system for controlling pan, tilt and zoom of a camera mounted on a platform in accordance with an operation through a controller, the system comprising:

   a shot storage that stores, as a shot, a desired shooting position that is changed according to setting positions of the pan, the tilt and the zoom of the camera; and
   a first shot reproduction unit that controls shot reproduction to set the camera to the shooting position stored as the shot in the shot storage when a shot reproduction command is given by a predetermined shot reproduction operation, wherein
   the first shot reproduction unit comprises a determination unit that, when the shot reproduction command is given, determines which a predetermined position is closer to either a wide side or a telephoto side than a current position of the zoom at a time when the shot reproduction command is given, and

   when the determination unit determines that the predetermined positions is closer to the wide side than the current position of the zoom, the first shot reproduction unit starts driving of the zoom toward the wide side prior to driving of the pan/tilt to drive the zoom for the predetermined position and then starts the driving of the pan/tilt for a position of the shot after the driving of the zoom is stopped or a predetermined time before the driving of the zoom is stopped.

2. The system according to claim 1, wherein the predetermined position used by the determination unit is a position of the zoom of the shot.

3. The system according to claim 2, wherein the first shot reproduction unit finishes the driving of the pan/tilt and the driving of the zoom simultaneously.

4. The system according to any one of claims 1 to 3, wherein when the determination unit determines that the predetermined position is closer to the telephoto side than the current position, the first shot reproduction unit starts the driving of the pan/tilt prior to the driving of the zoom, to drive the pan/tilt for the position of the shot and then starts the driving of the zoom for the position of the shot after the driving of the pan/tilt are stopped or the predetermined time before the driving of the pan/tilt are stopped.

5. The system according to any one of claims 1 to 3, wherein when the determination unit determines that the predetermined position is closer to the telephoto side than the current position, the first shot reproduction unit starts the driving of the pan/tilt and the driving of the zoom simultaneously to drive the pan/tilt and the zoom for the position of the shot.

6. The system according to claim 1, wherein the predetermined position used by the determination unit is a position that is determined in advance and that is different from the position of the shot.

7. The system according to any one of claims 1 to 6, further comprising:

   a reproduction-time designating unit that designates a shot reproduction time, wherein
   the first shot reproduction unit finishes the driving of the pan/tilt and the driving of the zoom within the shot reproduction time designated by the reproduction-time designating unit and causes a driving speed of the pan/tilt and a driving speed of the zoom meet a predetermined relation.

8. The system according to any one of claims 1 to 7, further comprising:

   an overlap time designating unit that designates an overlap time during which the driving of the pan/tilt and the driving of the zoom overlap each other.

9. The system according to any one of claims 1 to 8, further comprising:

a second shot reproduction unit that, when the shot reproduction command is given, controls the shot reproduction to start the driving of the zoom and the driving of the pan/tilt simultaneously and to finish the driving of the zoom and the driving of the pan/tilt simultaneously; and
a selecting unit that selects one that controls the shot reproduction from among the first shot reproduction unit and the second shot reproduction unit.

# FIG. 1

## FIG. 2

EP 1 921 843 A2

*FIG. 3*

PLATFORM CONTROLLER 12

JOY STICK 20

ZOOM KNOB 22

FOCUS KNOB 24

CPU 40

MEMORY SWITCH 26

SHOOTING SWITCH 30

SPEED ADJUSTMENT KNOB 32

OVERLAPPING TIME ADJUST-MENT KNOB 34

PLATFORM 16

MEMORY 44

CPU 42

DRIVING SECTION 46

# FIG. 4

RECEIVE SHOT
REPRODUCTION COMMAND

S10

READ OUT SHOT DATA HAVING DESIGNATED
SHOT NUMBER FROM MEMORY AND
SET UP SHOT TO BE REPRODUCED

S12

CALCULATE TEMPORAL PAN/TILT
DRIVING SPEED VPT'

S14

DETERMINE TEMPORAL ZOOM
DRIVING SPEED VZ'

S16

SET UP, BASED ON OVERLAP TIME COMMAND,
AN OVERLAP TIME TD IN WHICH PAN/TILT
AND ZOOM ARE DRIVEN SIMULTANEOUSLY

S18

CALCULATE TEMPORAL TOTAL DRIVING
TIME TTOTAL'

S20

CALCULATE PAN/TILT DRIVING TIME TPT,
DRIVING SPEED VPT, ZOOM DRIVING TIME
TZ AND DRIVING SPEED VZ

(CONT.)

(FIG.4 CONTINUED)

```
                                    S22
                              ┌──────────┐         NO
                              │ ZOOM IN? │──────────────────┐
                              └──────────┘                  │
                                   │ YES                    │
                                   │           S24          ▼                    S32
                          ┌─────────────────┐      ┌──────────────┐                NO
                          │ DRIVE PAN/TILT   │      │  ZOOM OUT?   │────────────────────┐
                          └─────────────────┘      └──────────────┘                    │
                                   │                      │ YES                         │
                                   ▼          S26         │          S34                │
                          ┌─────────────────┐      ┌──────────────┐                     │
                          │     IS IT       │ NO   │  DRIVE ZOOM  │                     │
                          │ OVERLAP TIME    │────┐ └──────────────┘                     │
                          │ BEFORE COMPLETION│    │       │                             │
                          │ OF DRIVING OF   │    │       ▼          S36                 │
                          │   PAN/TILT      │    │ ┌─────────────────┐                  │
                          │      ?          │    │ │     IS IT       │ NO               │
                          └─────────────────┘    │ │ OVERLAP TIME    │───┐              │
                                   │ YES          │ │ BEFORE COMPLETION│   │             │
                                   ▼         S28  │ │ OF DRIVING      │   │             │
                          ┌─────────────────┐     │ │   OF ZOOM       │   │             │
                          │   DRIVE ZOOM    │     │ │      ?          │   │             │
                          └─────────────────┘     │ └─────────────────┘   │             │
                                   │              │        │ YES          │             │
                                   ▼         S30  │        ▼        S38    │             │
                          ┌─────────────────┐     │ ┌──────────────────┐  │             │
                          │      IS         │ NO  │ │ DRIVE PAN/TILT   │  │             │
                          │  DRIVING OF     │──┐  │ └──────────────────┘  │             │
                          │ ZOOM FINISHED   │  │  │       │               │             │
                          │      ?          │  │  │       ▼       S40     │             │
                          └─────────────────┘  │  │ ┌─────────────────┐   │             │
                                   │ YES        │ IS DRIVING      │ NO │             │
                                   │            │  │ │ OF PAN/TILT     │────┘             │
                                   │            │  │ │  FINISHED?      │                  │
                                   │            │  │ └─────────────────┘                  ▼         S42
                                   │            │  │       │ YES              ┌─────────────────────┐
                                   │            │  │       │                  │   DRIVE PAN/TILT    │
                                   │            │  │       │                  └─────────────────────┘
                                   │            │  │       │                            │
                                   │            │  │       │                            ▼         S44
                                   │            │  │       │                  ┌─────────────────┐
                                   │            │  │       │                  │  IS DRIVING     │ NO
                                   │            │  │       │                  │ OF PAN/TILT     │──┐
                                   │            │  │       │                  │  FINISHED?      │
                                   │            │  │       │                  └─────────────────┘
                                   │            │  │       │                            │ YES
                                   │            │  │       │                            │
                              ┌────┴────────────┴──┴───────┴────────────────────────────┘
                              │
                              ▼
                        ┌──────────┐
                        │   END    │
                        └──────────┘
```

## FIG. 5

## FIG. 6

DESIGNATED SHOT REPRODUCTION TIME TSO

DESIGNATED OVERLAP TIME TDO

(A) TEMPORAL

TEMPORAL PAN/TILT DRIVING TIME TPT

TEMPORAL ZOOM DRIVING TIME TZ

OVERLAP TIME TD

TEMPORAL TOTAL DRIVING TIME TTOTAL

(B) FINAL

PAN/TILT DRIVING TIME TPT

ZOOM DRIVING TIME TZ

OVERLAP TIME TD

FINAL TOTAL DRIVING TIME TTOTAL

**EP 1 921 843 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2535567 B
- JP 2868087 B
- JP 3283615 B